**Europäisches Patentamt**

(19) **European Patent Office**

**Office européen des brevets**

(11) Numéro de publication: **0 133 416**
**B1**

(12) **FASCICULE DE BREVET EUROPEEN**

(45) Date de publication du fascicule du brevet: **14.12.88**

(51) Int. Cl.⁴: **G 02 B 6/24**

(21) Numéro de dépôt: **84810299.2**

(22) Date de dépôt: **21.06.84**

(54) Procédé d'alignement d'un guide d'onde et dispositif pour la mise en oeuvre de ce procédé.

(30) Priorité: **24.06.83 CH 3445/83**

(43) Date de publication de la demande:
**20.02.85 Bulletin 85/08**

(45) Mention de la délivrance du brevet:
**14.12.88 Bulletin 88/50**

(84) Etats contractants désignés:
**AT BE CH DE FR GB IT LI LU NL SE**

(56) Documents cités:
**EP-A-0 030 108**

**OPTICAL AND QUANTUM ELECTRONICS, vol. 9, no. 5, 1977, pages 393-397; R. ALTHAMMER: "Fully automatic system for the coupling alignment of optical fibres"**

(73) Titulaire: **FONDATION SUISSE POUR LA RECHERCHE EN MICROTECHNIQUE
Rue Jaquet-Droz 7
CH-2000 Neuchâtel 7 (CH)**

(72) Inventeur: **Edye, Thomas
58, rue Dufour
CH-2502 Bienne (CH)**
Inventeur: **Roussel, Jean-Paul
8bis, Boulevard Capdeville
F-09000 Foix (FR)**
Inventeur: **Parriaux, Olivier
Trois Rois 9
CH-1005 Lausanne (CH)**

(74) Mandataire: **Nithardt, Roland
CABINET ROLAND NITHARDT Rue Edouard Verdan 15
CH-1400 Yverdon-les-Bains (CH)**

Courier Press, Leamington Spa, England.

## Description

La présente invention concerne un procédé d'alignement d'un guide d'onde par rapport à un composant optique d'excitation, ces deux éléments étant en contact l'un avec l'autre dans un plan transverse.

Elle concerne également un dispositif pour la mise en oeuvre de ce procédé, comportant un support fixe agencé pour porter le composant optique d'excitation, un support mobile agencé pour porter le guide d'onde à aligner et pour le déplacer par rapport au composant optique d'excitation selon deux directions du plan transverse et des moyens mécaniques pour déplacer le guide d'onde selon un première direction du plan transverse.

On connaît déjà de nombreux connecteurs de fibres optiques destinés à aligner et coupler entre elles deux ou plusieurs fibres optiques. Certaines techniques utilisées ne s'appliquent qu'en laboratoire en raison de leur complexité ou de leur coût.

Dans les systèmes de capteurs ou de télécommunications optiques, il y a nécessité, au stade industriel, d'aligner et d'assembler divers composants essentiels tels qu'une source et une fibre, une fibre et une fibre, une fibre et un composant optique, une fibre et un composant optique intégré, etc... Ces couplages doivent pouvoir être faits rapidement avec une bonne reproductibilité, indépendamment de l'habileté d'un opérateur et en recherchant systématiquement l'optimum d'excitation.

L'optique guidée requiert une précision de dimension transverse égale ou inférieure à la longueur d'onde. Actuellement, aucun procédé mécanique classique n'est assez précis pour permettre un assemblage reproductible sans nécessiter un réglage individuel comprenant une phase d'excitation et au moins une phase de mesure.

Les composants à coupler sont en général encapsulés préalablement dans une pièce de plus grande taille, dans laquelle ils peuvent être précentrés grossièrement ou non dans un plan transverse, mais sont en général positionnés sur l'axe longitudinal par rapport à la face de la pièce d'encapsulage.

La demande de brevet européen publiée sous le No. 30 108 décrit un dispositif de couplage de fibres optiques dans lequel on déplace angulaire-ment une des fibres par rapport à l'autre pour détecter les défauts d'alignement.

L'article "Fully automatic system for the coupling alignment of optical fibres" paru dans la revue Optical and Quantum Electronics, vol. 9, no. 5, 1977, pages 393—397, décrit une technique de laboratoire pour aligner des fibres optiques, basée sur la détection du maximum de lumière tranmise.

Ces systèmes présentent l'inconvénient de ne pas répondre à des exigences industrielles.

La présente invention se propose de mettre à disposition de l'industrie un procédé d'alignement et un dispositif de mise en oeuvre de ce procédé qui répond aux exigences industrielles susmentionnées.

Dans ce but, le procédé d'alignement selon l'invention est caractérisé en ce que l'on déplace l'un des éléments par rapport à l'autre selon une première direction du plan transverse, en ce que l'on détermine instantanément la dérivée (dP/dt) par rapport au temps de la fonction d'excitation P définie par au moins une partie de l'intensité lumineuse injectée dans le guide d'onde par le composant optique d'excitation, en ce que l'on fournit, à des moyens mécaniques agencés pour déplacer cet élément selon une première direction, un signal de commande pour déplacer cet élément dans cette direction à une vitesse (v) donnée ayant une certaine relation fonctionelle avec cette dérivée, cette certaine relation fonctionnelle étant telle que la vitesse ne devient nulle que lorsque le maximum de la fonction d'excitation est atteint et telle que

$$v=(dP/dt)^s$$

où s est lié par la relation

$$1/2<s<1$$

et en ce que l'on effectue les mêmes opérations en déplaçant cet élément selon une seconde direction du plan transverse.

Le dispositif pour la mise en oeuvre de ce procédé est caractérisé en ce qu'il comprend un dispositif pour déterminer la dérivée par rapport au temps (dP/dt) de la fonction d'excitation (P) et pour fournir à ces moyens mécaniques un signal de vitesse (v) dépendant de cette dérivée, un dispositif pour contrôler cette vitesse de telle manière qu'elle ne devienne nulle que lorsque la dérivée selon l'une de ces directions devient nulle, des moyens mécaniques pour déplacer le guide d'onde selon la seconde direction du plan transverse et des moyens pour asservir sa vitesse de déplacement selon ladite certaine relation fonctionnelle de la revendication 1.

La présente invention sera mieux comprise en référence à la description d'un exemple de réalisation et du dessin annexé dans lequel:

La figure 1 représente un graphique illustrant notamment les valeurs de la fonction d'excitation selon l'axe X, et

La figure 2 représente une vue schématique du circuit électronique utilisé pour mettre en oeuvre le procédé selon l'invention.

Le but pratique du procédé décrit consiste à effectuer l'alignement automatique des deux éléments, le composant optique d'excitation d'une part et le guide d'onde d'autre part, dans le plan transverse défini par deux axes X, Y pouvant être orthogonaux, par la recherche du maximum de la fonction d'excitation P définie comme l'intensité lumineuse, ou une partie proportionnelle de celle-ci, mésurée dans le guide d'onde à exciter, cette fonction étant liée aux deux variables de position X et Y.

Dans la pratique, on déplace le guide d'onde à aligner, monté sur son support, ou élément de connecteur, au moyen d'une mécanique de haute précision spécialement conçue pour effectuer des mouvements de faible amplitude, et comportant des moteurs à courant continu asservis en vitesse. La recherche du maximum se fait axe après axe, du fait qu'il est impossible d'effectuer une estimation instantanée des deux composants du gradient de la fonction d'excitation sans risquer de provoquer une détérioration des surfaces de contact des pièces à assembler. Elle peut se faire de manière itérative, c'est-à-dire par approches successives alternativement selon l'axe X et selon l'axe Y.

La recherche sur un axe, par exemple l'axe X, se fait par la mesure de l'intensité ou d'une partie de celle-ci, transmise au guide d'onde par le composant optique d'excitation, par le calcul instantané analogique de sa dérivée par rapport au temps dP/dt et par la fourniture au moteur d'un signal d'erreur lui imposant une vitesse v ayant une certaine relation fonctionnelle avec dP/dt. Cette relation fonctionnelle est choisie de telle manière que la vitesse soit nulle lorsque dP/dX=0, c'est-à-dire lorsqu'on se trouve au maximum de la fonction d'excitation P(X).

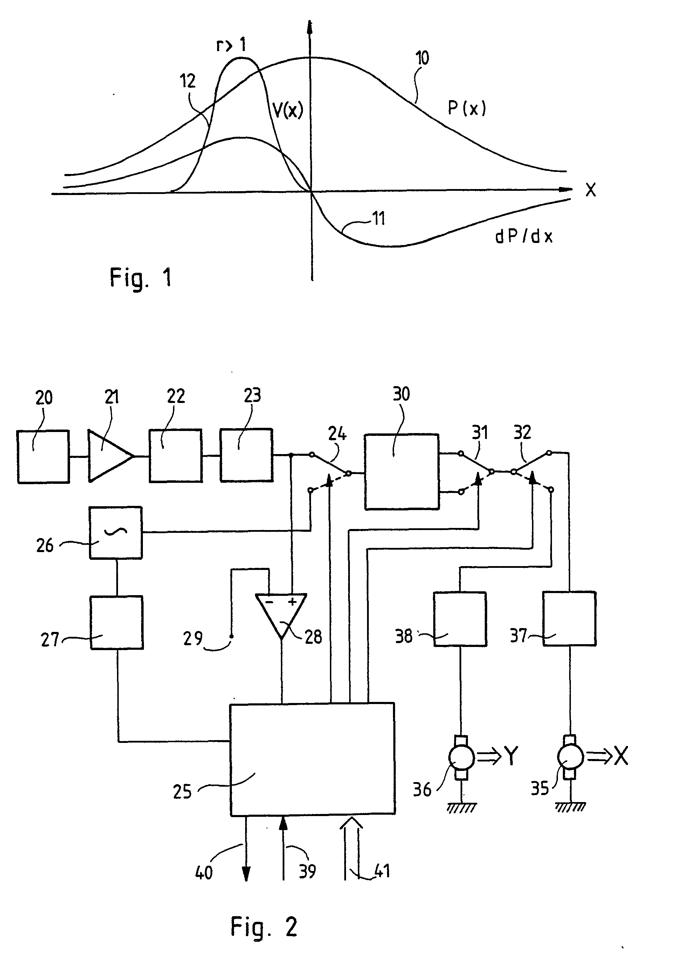

Les variations en fonction de X de la fonction d'excitation P(X) sont représentées par la courbe 10 illustrée par la fig. 1. Les variations de la fonction dérivée dP/dX sont représentées par la courbe 11 de la fig. 1.

En pratique, un détecteur, par exemple une photodiode, permet de mesurer les valeurs de la fonction d'excitation P(X) et l'on détermine sa dérivée par rapport au temps, soit dP/dt, liée à dP/dX par la relation

$$dP/dt = dP/dX \cdot dX/dt = dP/dX \cdot v$$

Si dP/dt=0, cela peut signifier que dP/dX=0 c'est-à-dire que l'on a effectivement atteint le maximum de la fonction d'excitation, ou que v=0, ce qui peut provenir d'un grippage mécanique. Pour que l'annulation de la vitesse v ne se produise qu'au moment où dP/dX=0, il faut que la vitesse soit une fonction de dP/dt, soit v=f(dP/dt) et que la dérivée

$$dP/dX = (dP/dt)/f(dP/dt)$$

soit nulle lorsque dP/dt est nul.

La fonction f doit assurer deux fonctions pratiques: d'une part empêcher un arrêt soudain dû à un grippage mécanique, ce qui garantit la fiabilité de la méthode, et d'autre par permettre d'atteindre le maximum en douceur, ce qui garantit la précision de la méthode.

A titre d'exemple, si $v=(dP/dt)^2$
la relation
dP/dX=(dP/dt)/v s'écrit dans ce cas:
$dP/dX = (dP/dt)/(dP/dt)^2 = 1/(dP/dt)$

Dans ce cas, dP/dX=0 n'est pas atteint pour dP/dt=0.

Par ailleurs, si l'on suppose qu'en raison de frottements mécaniques, la vitesse décroît subitement par exemple de 10%, la dérivée par rapport au temps dP/dt décroît également de 10%. La consigne pour la nouvelle vitesse sera alors de $(90\%)^2$ c'est-à-dire d'environ 80% de la consigne originale. On constate qu'avec cette relation fonctionnelle toute décroissance (respectivement toute croissance) accidentelle de la vitesse, provoque une décroissance supplémentaire (respectivement un accroissement supplémentaire) de la consigne de vitesse transmise au moteur asservi, jusqu'à l'arrêt (respectivement l'explosion) du système. Le système est donc instable et les variations sont amplifiées.

Un autre exemple est celui où v=dP/dt
La vitesse est astreinte à être proportionnelle à dP/dt
La relation dP/dX=(dP/dt)/(dP/dt)=1
montre bien que dP/dt=0
n'entraine pas dP/dX=0.
Par ailleurs, en supposant comme précédemment que v décroît accidentellement de 10%, par exemple en raison de frottements mécaniques, dP/dt décroît également de 10%.
La relation v=dP/dt montre que la nouvelle vitesse ordonnée sera de 10% inférieure à l'ancienne, de sorte que l'on aboutira, bien que plus lentement que précédemment, à un arrêt. Le système est par conséquent instable.

Supposons que la relation fonctionnelle est telle que

$$v = \sqrt{dP/dt}, \text{ il en résulte que}$$

$$dP/dX = (dP/dt)/\sqrt{(dP/dt)} = \sqrt{(dP/dt)}$$

On constate que si dP/dt=0, dP/dX=0

Par ailleurs, si la vitesse décroît accidentellement, par exemple de 10%, dP/dt décroît également de 10% mais la consigne pour la nouvelle vitesse sera de $\sqrt{90\%}$, c'est-à-dire environ 95% de la consigne précédente. De ce fait, on peut affirmer que la relation fonctionnelle susmentionnée atténue les effets de blocage ou d'accélération fortuits. Elle engendre un effet de stabilisation et empêche le blocage ou l'explosion. En cas de ralentissement, la vitesse est augmentée et en cas d'accélération le moteur est freiné.

D'une manière plus générale, si $v=(dP/dt)^s$, un système stable requiert s<1.
La relation $v=(dP/dt)^s$ s'écrit $v=(dP/dX)^{s/(1-s)}$.
L'atteinte du maximum illustré par la courbe 12 de la figure 1, impose que r=s/(1-s)>1, et pour une approche du maximum en douceur, ceci revient à imposer à s la condition suivante

$$1/2 < s < 1$$

Cette condition permet d'une part une atténuation des irrégularités du mouvement et d'autre part une arrivée en douceur au maximum de la fonction d'excitation.

Il est certain que cette fonction peut être engendrée par programmation d'une mémoire morte, mais il faut qu'en tout instant t, la vitesse v(t) puisse être assimilée à une fonction locale du genre:

$$v=(dP/dt)^s \text{ avec } 1/2<s<1$$

Une logique permet de lancer la recherche sur un axe, dans le bon sens par la détection de la succession des signes de la dérivée dP/dt lors d'une commande du moteur par un signal périodique long d'une période lorsqu'on est au point de départ; d'arrêter la recherche une fois atteint le maximum relatif selon cet axe et de commuter tout le circuit de recherche sur l'autre axe et ainsi de suite jusqu'à satisfaction du critère de maximum.

Le circuit électronique représenté par la fig. 2, comporte un détecteur 20 suivi d'un amplificateur 21, d'un filtre passe-bas 22 destiné à supprimer les parasites, notamment les perturbations haute fréquence, et d'un bloc de dérivation 23 qui calcule la dérivée dP/dt de la fonction d'excitation P.

Un interrupteur 24 commandé par un circuit de contrôle logique 25 permet de passer de la phase "test" destinée à déterminer le pente de la dérivée à la phase "asservissement" destinée à asservir la vitesse des déplacements de l'un des composants alternativement selon les axes X et Y jusqu'à ce que l'on atteigne le maximum de la fonction d'excitation.

Le circuit test se compose d'un oscillateur basse fréquence 26 qui engendre un déplacement correspondant à une alternance sinisoïdale de ce composant qui peut être soit le composant optique soit le guide d'onde, et d'une bascule 27 qui permet de déterminer et de mémoriser le signe du signal de test au moment où on passe à l'état asservi.

Un comparateur 28 à seuil 29 permet de déterminer le passage par zéro du signal dérivé. Ce comparateur est connecté entre le bloc de dérivation 23 et le circuit de contrôle logique 25.

Un circuit analogique-numérique 30 permet de réaliser la relation fonctionnelle liant la vitesse v à la dérivée dP/dt. Cette relation fonctionnelle peut être programmée par une mémoire morte ou obtenue par tout autre moyen approprié.

Un interrupteur 31 commandé par le circuit de contrôle logique 25 permet d'inverser la polarité du signal de sortie du circuit 30, en fonction de la position initiale ces composants à aligner, cette polarité étant déterminée au cours du test.

Un autre interrupteur 32 également commandé par le circuit de contrôle logique 25 permet de connecter alternativement les circuits d'alimentation des moteurs 35 et 36 aux sorties du circuit 30, par l'intermédiaire des régulateurs 37 et 38. Les moteurs sont du type à courant continu avec tachymètre et les régulateurs asservissent ces moteurs en vitesse.

Deux entrées 39, 40 permettent respectivement d'enclencher et d'arrêter le processus. Une entrée 41 permet de fixer par avance le nombre d'itérations que l'on souhaite effectuer pour approcher au mieux du maximum de la fonction d'excitation.

Les moyens mécaniques agissant sur l'un des composants comportent en fait les moteurs susmentionnés qui agissent sur des organes de déplacement micrométriques permettant d'effectuer des mouvements très précis de faible amplitude.

## Revendications

1. Procédé d'alignement d'un guide d'onde par rapport à un composant optique d'excitation, ces deux éléments étant en contact l'un avec l'autre dans un plan transverse, caractérisé en ce que l'on déplace l'un des éléments par rapport à l'autre selon une première direction du plan transverse, en ce que l'on détermine instantanément la dérivée (dP/dt) par rapport au temps de la fonction d'excitation P définie par au moins une partie de l'intensité lumineuse injectée dans le guide d'onde par le composant optique d'excitation, en ce que l'on fournit, à des moyens mécaniques agencés pour déplacer cet élément selon une première direction, un signal de commande pour déplacer cet élément dans cette direction à une vitesse (v) donnée ayant une certaine relation fonctionnelle avec cette dérivée, cette certaine relation fonctionnelle étant telle que la vitesse ne devient nulle que lorsque le maximum de la fonction d'excitation est atteint et telle que

$$v=(dP/dt)^s$$

où s est lié par la relation

$$1/2<s<1$$

et en ce que l'on effectue les mêmes opérations en déplaçant cet élément selon une seconde direction du plan transverse.

2. Procédé selon la revendication 1, caractérisé en ce que l'on effectue au moins deux itérations pour assurer une approche progressive du maximum de la fonction d'excitation, alternativement selon chacun des deux directions.

3. Procédé selon la revendication 1, caractérisé en ce que lesdites première et seconde directions sont perpendiculaires entre elles.

4. Procédé selon la revendication 1, caractérisé en ce que l'on effectue dans un premier temps un test en déplaçant l'un des éléments par rapport à l'autre, ce déplacement correspondant à au moins une alternance d'un oscillateur basse fréquence, et en ce que l'on déduit de ce test, le sens de déplacement à donner à un élément pour atteindre le maximum de la fonction d'excitation.

5. Dispositif pour la mise en oeuvre du procédé selon la revendication 1, comportant un support fixe agencé pour porter le composant optique d'excitation, un support mobile agencé pour porter le guide d'onde à aligner et pour le déplacer par rapport au composant optique d'excitation selon deux directions du plan transverse et des moyens mécaniques (35) pour déplacer le guide d'onde selon une première direction du plan transverse, caractérisé en ce qu'il comprend un dispositif (23) pour déterminer la dérivée par rapport au temps (dP/dt) de la fonction d'excitation (P) et pour fournir à ces moyens mécaniques un signal de vitesse (v) dépendant de cette dérivée, un dispositif (30) pour contrôler cette vitesse de telle manière qu'elle ne devienne nulle que lorsque la dérivée selon l'une de ces directions devient nulle, des moyens mécaniques (36) pour déplacer le guide d'onde selon la second direction du plan transverse et des moyens pour asservir sa vitesse de déplacement selon ladite certaine relation fonctionnelle de la revendication 1.

6. Dispositif selon la revendication 8, caractérisé en ce que les moyens mécaniques comportent deux moteurs à courant continu.

7. Dispositif selon la revendication 6, caractérisé en ce qu'il comporte un circuit de détection comprenant un détecteur (20) de la fonction d'excitation, un amplificateur (21), un filtre passe-bas (22) et un bloc de dérivation (23), un circuit test comprenant un oscillateur basse fréquence (26) et une bascule (27) pour déterminer et mémoriser le signal du signal de test, un circuit de commande logique (30) pour commander les fonctions test et asservissement des moyens mécaniques, et un circuit agencé pour définir la relation fonctionnelle.

**Patentansprüche**

1. Verfahren zur Fluchtung (Zentrierung, Ausrichtung, Anpassung) eines Wellenleiters auf eine optische Erregereinheit, wobei diese zwei Elemente in einer Querebene miteinander in Kontakt sind, dadurch gekennzeichnet, daß man eines dieser Elemente bezüglich des anderen in einer ersten Richtung der Querebene verschiebt, daß man kurz die Ableitung (dP/dt) der Funktion der Erregung (P) nach der Zeit bestimmt, wobei P durch mindestens einen Teil der von dem optischen Erreger in den Wellenleiter gesandten Lichtintensität definiert ist, daß man außerdem an mechanische Mittel, die dazu dienen, dieses Element in einer ersten Richtung zu verschieben, ein Steuersignal abgibt, zum Verschieben dieses Elements in diese Richtung mit einer gegebenen Geschwindigkeit (v), die eine bestimmte funktionelle Beziehung mit dieser Ableitung hat, wobei diese bestimmte funktionelle Beziehung so ist, daß die Geschwindigkeit erst Null wird, wenn das Maximum der Erregungsfunktions erreicht ist und somit

$$v=(dP/dt)^s$$

wo s der Beziehung folgt

$$1/2<s<1$$

und daß man die gleichen Operationen ausführt, während man dieses Element in der Querebene in einer zweiten Richtung verschiebt.

2. Verfahren nach Anspruch 1, dadurch gekennzeichnet, daß man wechselweise nach jeder der zwei Richtungen mindestens zwei schrittweise Näherungen ausführt, um eine progressive Annäherung an die Erregerfunktion zu erhalten.

3. Verfahren nach Anspruch 1, dadurch gekennzeichnet, daß die erste und die zweite Richtung zueinander senkrecht stehen.

4. Verfahren nach Anspruch 1, dadurch gekennzeichnet, daß man in einem ersten Arbeitsgang einen Test macht, indem man das eine der Elemente in Bezug auf das andere verschiebt, wobei diese Verschiebung mindestens einer Halbschwingung eines Niederfrequenzschwingers entspricht, und daß man aus diesem Test schließt, welche Verschiebungsrichtung man für ein Element braucht, um das Maximum der Erregerfunktion zu erreichen.

5. Einrichtung zur Durchführung des Verfahrens nach Anspruch 1, bestehend aus einer feststehenden Unterlage, die dazu dient, die optische Erregereinheit zu tragen, einer beweglichen Unterlage, die dazu dient, den zu fluchtenden Wellenleiter zu tragen und bezüglich der optischen Erregereinheit nach zwei Richtungen in der Querebene zu verschieben, und mechanische Mittel (35), um den Wellenleiter in einer ersten Richtung der Querebene zu verschieben, dadurch gekennzeichnet, daß sie eine Einrichtung (23) aufweist zur Berechnung der Ableitung (dP/dt) der Erregerfunktion (P) nach der Zeit und zur Abgabe eines von dieser Ableitung abhängigen Signals für die Geschwindigkeit (v), weiterhin eine Einrichtung (30), um diese Geschwindigkeit so zu überwachen, daß sie erst dann zu Null wird, wenn die Ableitung nach einer dieser Richtungen zu Null wird, mechanische Mittel (36), um den Wellenleiter in die zweite Richtung der Querebene zu verschieben, und Mittel, um seine Verschiebegeschwindigkeit nach der bestimmten funktionellen Beziehung des Anspruches 1 zu regeln.

6. Einrichtung nach Anspruch 5, dadurch gekennzeichnet, daß die mechanischen Mittel zwei Gleichstrommotoren aufweisen.

7. Einrichtung nach Anspruch 6, dadurch gekennzeichnet, daß sie einen Suchschaltkreis mit einem Detektor (20) für die Erregerfunktion aufweist, einen Verstärker (21), einen Tiefpaßfilter (22) und einen Rechner für die Ableitung (23), eine Testschaltung mit einem Niederfrequenzschwinger (26) und einer Kippschaltung (27) zum Bestimmen und Speichern des Testsignalzeichens, eine Schaltung für die Verknüpfungssteuerung (30), um die Funktionen Test und Regelung der mechanischen Mittel zu steuern, und eine Schaltung, die dazu dient, die funktionelle Beziehung zu definieren.

**Claims**

1. Method of alignment of a wave guide in respect to an optical excitation unit, these two elements contacting each other in a transverse plane, characterized in that one of these elements is moved in respect to the other along a first direction within said transverse plane, in that the time derivative (dP/dt) of the excitation function (P) is defined by at least a part of the light intensity which is injected into the wave guide by the optical excitation unit, in that a control signal is provided to mechanical means for moving this element in a first direction, said signal for moving this element in this direction with a given speed (v) being controlled by a certain functional relationship to said time derivative, this certain functional relationship being such that the speed becomes zero when a maximum of said excitation function is attained and such as:

$$v=(dP/dt)^s$$

where s is bound by the relation

$$1/2 < s < 1$$

and in that the same operations are effectuated by moving this element along a second direction in said transverse plane.

2. Method according to claim 1, characterized in that at least two alternating iterations are effectuated to assure a progressive approach to the maximum of the excitation function.

3. Method according to claim 1, characterized in that said first and second directions are perpendicular to each other.

4. Method according to claim 1, characterized in that in a first time a test is effectuated by moving one element in respect to the other, this displacement corresponding at least with one cycle of a low frequency oscillator and in that the direction of the displacement to be imposed to one element in order to attain the maximum of the excitation function is deducted from this test.

5. Device for the use of the method according to claim 1 comprising a fixed support provided to carry the optical excitation unit, a movable support provided to carry the wave guide to be aligned and to move it in respect to the optical excitation unit along two directions in the transverse plane, and mechanical means (35) for moving the wave guide along a first direction in the transverse plane, characterized in that it comprises a device (23) for determining the time derivative (dP/dt) of the excitation function (P) and for providing a speed signal (v), which depends of this time derivative, to these mechanical means (36) for moving the wave guide along the second direction in the transverse plane and means for bringing under control its speed of displacement according said certain functional relationship of claim 1.

6. Device according to claim 5, characterized in that the mechanical means comprise two DC motors.

7. Device according to claim 6, characterized in that it comprises a detection circuit comprising a detector (20) for the excitation function, an amplifier (21), a low pass filter (22) and a derivation unit (23), a test circuit comprising a low frequency oscillator (26) and a flip-flop (27) for determining and memorizing the sign of the test signal, a logical control circuit (30) for controlling the test and servo-control functions of the mechanical means, and a circuit provided to define the functional relationship.

Fig. 1

Fig. 2